# NEW EUROPEAN PATENT SPECIFICATION

(11) **EP 3 063 201 B2**
(45) Date of publication and mention of the opposition decision: **09.12.2020**
(45) Mention of the grant of the patent: 13.12.2017
(21) Application number: 14789248.3
(22) Date of filing: 23.10.2014
(51) Int. Cl.: C08G 18/72, C08G 18/79, C08G 18/12, C08G 18/42, C08G 18/48, C08G 18/40

(54) **LOW DENSITY POLYURETHANE MICROCELLULAR ELASTOMER**
MIKROZELLULÄRES ELASTOMER AUS POLYURETHAN MIT NIEDRIGER DICHTE
ÉLASTOMÈRE MICRO-CELLULAIRE DE POLYURÉTHANE BASSE DENSITÉ

(30) Priority: 28.10.2013 WO PCT/CN2013/086082
(43) Date of publication of application: 07.09.2016
(73) Proprietor: BASF SE, 67056 Ludwigshafen am Rhein (DE)
(72) Inventor: TOMOVIC, Zeljko, 49448 Lemförde (DE); KAMM, Andre, 49163 Bohmte (DE); LIANG, Dong, Guangzhou City 511400 (CN); ORTALDA, Marco, I-10100 Torino (IT); CUBUKCU, Erhan, 34912 Istanbul (TR)
(74) Representative: BASF IP Association
(86) International application number: PCT/EP2014/072730
(87) International publication number: WO 2015/062960

(56) References cited:
- EP-A1- 0 582 385
- WO-A1-98/41681
- WO-A1-2013/045405
- CN-A- 1 821 221
- CN-A- 101 486 788
- CN-A- 101 486 801
- CN-A- 101 735 597
- CN-A- 102 329 409
- CN-A- 102 504 181
- CN-A- 102 604 520
- CN-A- 103 275 278
- Anonymous: "Bayer MaterialScience NAFTA - Products - Arcol polyether", , 16 January 2015 (2015-01-16), XP055162612, Retrieved from the Internet: URL:http://www.bayermaterialsciencenafta.c om/products/index.cfm?mode=grades&pp_num=E B7C464B-C3D0-7EE4-1E40B9794231F64C&o_num=5 [retrieved on 2015-01-16]

## Description

The present invention is concerned with a process according to claim 1. The present invention further concerns a polyurethane foam moldings obtained from a process according to the invention and the use of a polyurethane foam moldings according to the invention as shoe sole.

A trend toward lighter shoe soles has been apparent in recent years. However, the reduction in the density of polyurethane shoe soles leads to problems with dimensional stability of the moldings. This means that the entire sole becomes smaller or else the surface quality of the shoe soles suffers as a result of shrunk places.

To improve the dimensional stability of polyurethanes, various possibilities have been discussed in the literature. For example, DE 2402734 describes the production of integral polyurethane foams in which a prepolymer based on polyesterol is mixed with a polyol component based on polyetherols. Disadvantages of the polyurethane systems produced in this way are that the incompatibility of the polyesterols and polyetherols especially at low densities, has an adverse effect on the mechanical properties and that shrinkage of the integral polyurethane foams cannot be prevented.

A further possibility described in the literature is the use of graft or polymer polyols. Thus, EP 1 042 384 describes the production of low-density, dimensionally stable shoe soles based on polyetherol by use of large amounts of graft polyether polyols. Disadvantages of this process are the significantly poorer mechanical properties compared to shoe soles based on polyesterol. Furthermore, the high proportion of polymer polyetherols has an adverse effect on the viscosity of the polyol component.

The use of polymer polyols based on polyesterols in a polyester polyurethane is described in EP 1 790 675 and EP 1 756 187. As a result of the higher viscosity of the large amounts of polyester polymer polyol, these systems are significantly more difficult to process. Furthermore, EP 1 790 675 and EP 1 756 187 disclose the use of polymer polyols based on polyetherol in polyesterol polyurethane systems. The documents show, in the comparative example, that the use of polymer polyetherols leads to an integral foam having an unsatisfactory surface and a coarse cell structure. Further the application of polymer polyols increases viscosity of the components and makes it more difficult to mix the components and to inject the reaction mixture into the mould. In addition polymer polyols are in general more expensive than polyetherols or polyesterols.

EP 0 582 385 describes reaction system comprising 1) a polyisocyanate composition having a free NCO-value of 15-25% by weight which is the reaction product of an excess of an organic polyisocyanate and a polyether polyol having functionality of 2-6, molecular weight of 2000-6000 and an EO content of 20-35% by weight; 2) polyol which is polyester polyol having functionality of 2-3 and molecular weight of 750-4000; and 3) water. Polyurethane mouldings according to EP 582385 can still be improved in mechanical properties as well in dimensional stability and surface quality especially of lager parts as for example high heel ladies shoes.

EP 358328 discloses an isocyanate composition comprising 10-90 parts by weight of polyester based isocyanate prepolymer having a functionality of 2-2.3 and made from a polyester polyol having a molecular weight of 1000-10000, and 10-90 parts by weight of polyether based isocyanate prepolymer having a functionality of 2-2.3 and made from polyether polyol having a molecular weight of 1000-10000 and an ethylene oxide content of 3-50% weight, the free NCO value of the prepolymer composition being 8-25%. Polyurethane mouldings according to EP 358328 can still be improved in mechanical properties as well in dimensional stability especially of lager parts as for example high heel ladies shoes.

CN101486788 describes a method for producing a polyurethane foam having density of 0,2 to 0,5 g/cm³, comprising the step of reacting a polyol component containing polyester polyol and polyisocyanate prepolymer containing 65-75 wt% polyisocyanate, 15-30 wt% polyester and 0-15 wt% polyether polyol, preferably PO/EO polyol with functionality of 2-4 and Mw of 500-6000. Also polyurethane moldings according to CN101486788 can still be improved in mechanical properties as well in dimensional stability especially of lager parts as for example high heel ladies shoes

It was an object of the present invention to provide a polyurethane foam molding with density below 500 g/l, and excellent dimensional stability without shrinkage and excellent surface quality. It was further object of the present invention to provide a reaction mixture to obtain such polyurethane moldings wherein the raw materials are cheap and show a low viscosity and can easily be mixed.

This object is achieved by a polyurethane foam moldings having a density of 200 to 500 g/dm³, wherein
a) polyisocyanate prepolymer obtainable by reacting at least one organic polyisocyanate (a1), at least one first polyesterol (a2) and at least one polyetherol (a3) obtained from the alkoxylation of a starter molecule with alkylenoxide comprising ethylene oxide wherein the polyetherol (a3) has a hydroxyl number in the range of 20 to 65 mg KOH/g, a number average molecular weight of 2000 to 6000, a functionality of 1.7 to 3.0 and a content of ethylenoxide units in the range of 15 to 25 % by weight based on the total weight of the polyetherol (a3) and wherein the content of the polyetherol (a3), based on the total weight of the organic polyisocyanate prepolymer (a), is in the range of 3 to 15 % by weight,
   is mixed with
b) at least one second polyesterol, and the second polyesterol (b) does not contain any dispersed particles
c) blowing agent and optionally
d) chain extender and/or crosslinker,
e) catalyst and
f) other auxiliaries and/or additives
to form a reaction mixture, which does not comprise any polyols having a molecular weight of at least 500g/mol in addition to the compounds (a2), (a3) and (b) the latter is introduced into a mold and allowed to react to form a polyurethane foam molding.

The present invention further concerns a polyurethane foam moldings obtained from a process according to the invention and the use of a polyurethane foam moldings according to the invention as shoe sole.

For the purposes of the invention, polyurethane foam moldings are polyurethane foams which are produced in a mold. The overall foam density averaged over the core and the outer zone is preferably from > 80 g/l to 500 g/l, more preferably from 150 g/l to 450 g/l, more preferably from 200 g/l to 350g/l and the most preferably from 250 g/l to 300g/l.

The organic isocyanate prepolymer (a) is obtained from the reaction of an organic isocyanate (a1) one first polyesterol (a2) and at least one polyetherol (a3). Organic isocyanates (a1) used for producing the polyurethane foam moldings of the invention comprise the aliphatic, cycloaliphatic and aromatic bifunctional or polyfunctional isocyanates known from in the field of polyurethanes and also any mixtures thereof. Examples are 4,4'-methanedi(phenyl diisocyanate), 2,4'-methanedi(phenyl diisocyanate), mixtures of monomeric methanedi(phenyl isocyanates) and homologues of methanedi(phenyl diisocyanate) having a larger number of rings (polymeric MDI), tetramethylene diisocyanate, hexamethylene diisocyanate (HDI), isophorone diisocyanate (IPDI), tolylene 2,4- or 2,6-diisocyanate (TDI) or mixtures of the isocyanates mentioned.

Preference is given to using 4,4'-MDI. The 4,4'-MDI which is preferably used can comprise from 0 to 20% by weight of 2,4'-MDI and small amounts, up to about 10% by weight, of allophanate- or uretonimine-modified polyisocyanates. It is also possible to use small amounts of polyphenylenepolymethylene polyisocyanate (polymeric MDI). The total amount of these high-functionality polyisocyanates should not exceed 5% by weight of the isocyanate used.

As first polyesterols (a2), it is possible to use polyesterols which are customarily used in polyurethane chemistry. First polyesterols (a2) can be prepared, for example, from organic dicarboxylic acids having from 2 to 12 carbon atoms, preferably aliphatic dicarboxylic acids having from 4 to 6 carbon atoms, and polyhydric alcohols, preferably diols, having from 2 to 12 carbon atoms, preferably from 2 to 6 carbon atoms. Possible dicarboxylic acids are, for example: succinic acid, glutaric acid, adipic acid, suberic acid, azelaic acid, sebacic acid, decanedicarboxylic acid, maleic acid, fumaric acid, phthalic acid, isophthalic acid and terephthalic acid. The dicarboxylic acids can be used either individually or in admixture with one another. It is also possible to use the corresponding carboxylic acid derivatives, e.g. dicarboxylic esters of alcohols having from 1 to 4 carbon atoms or dicarboxylic anhydrides, instead of the free dicarboxylic acids. Preference is given to using dicarboxylic acid mixtures of succinic, glutaric and adipic acid in weight ratios of, for example, 20-35: 35-50: 20-32, and in particular adipic acid. Examples of dihydric and polyhydric alcohols, in particular diols, are: ethanediol, diethylene glycol, 1,2- or 1,3-propanediol, dipropylene glycol, 1,4-butanediol, 1,5-pentanediol, 1,6-hexanediol, 1,10-decanediol, glycerol and trimethylolpropane. Preference is given to using ethanediol, diethylene glycol, 1,4-butanediol, glycerol, 1,5-pentanediol and 1,6-hexanediol. It is also possible to use polyester polyols derived from lactones, e.g. ε-caproiactone, or hydroxycarboxylic acids, e.g. ω-hydroxycaproic acid.

To prepare the polyester polyols, the organic, e.g. aromatic and preferably aliphatic, polycarboxylic acids and/or polycarboxylic acid derivatives and polyhydric alcohols can be polycondensed in the absence of catalysts or preferably in the presence of esterification catalysts, advantageously in an atmosphere of inert gas such as nitrogen, carbon monoxide, helium, argon, in the melt at temperatures of from 150 to 250°C, preferably from 180 to 220°C, optionally under reduced pressure, to the desired acid number which is preferably less than 10, particularly preferably less than 2. In a preferred embodiment, the esterification mixture is polycondensed at the abovementioned temperatures to an acid number of from 80 to 30, preferably from 40 to 30, under atmospheric pressure and subsequently under a pressure of less than 500 mbar, preferably from 50 to 150 mbar. Possible esterification catalysts are, for example, iron, cadmium, cobalt, lead, zinc, antimony, magnesium, titanium and tin catalysts in the form of metals, metal oxides or metal salts. However, the polycondensation can also be carried out in the liquid phase in the presence of diluents and/or entrainers such as benzene, toluene, xylene or chlorobenzene to azeotropically distill off the water of condensation. To prepare the polyester polyols, the organic polycarboxylic acids and/or polycarboxylic acid derivatives and polyhydric alcohols are advantageously polycondensed in a molar ratio of 1:1-1.8, preferably 1:1.05-1.2.

The polyester polyols obtained preferably have a functionality of 1.8 to 4, more preferably from 1.9 to 3 even more preferable 1.95 to 2.7, and most preferable 1.95 to 2.3 and a number average molecular weight of from 480 to 3000 g/mol, preferably 1000 to 3000 g/mol more preferably 1500 to 2500 g/mol and in particular 1800 to 2300 g/mol.

Polyetherols (a3) are prepared by known processes, for example by anionic polymerization with alkali metal hydroxides or alkali metal alcoholates as catalysts and with addition of at least one initiator which comprises 2 to 6, preferably 2 to 4, more preferably 2 to 3 bound hydrogen atoms reactive toward isocyanate groups per molecule, or by cationic polymerization with Lewis acids, such as antimony pentachloride or boron fluoride etherate, from one or more alkylene oxides having 2 to 4 carbon atoms in the alkylene radical. Suitable alkylene oxides are, for example, tetrahydrofuran, 1,3-propylene oxide, 1,2- or 2,3-butylene oxide and preferably ethylene oxide and 1,2-propylene oxide. Furthermore, multimetal cyanide compounds, so-called DMC catalysts, may also be used as catalysts. The alkylene oxides may be used individually, alternately in succession or as mixtures, whereby the polyetherol (a3) contains ethylenoxide units in the range of 15 to 25 % by weight and preferably 18 to 22 % by weight based on the total weight of the polyetherol (a3). Mixtures of 1,2-propylene oxide and ethylene oxide are preferred wherein the alkyleneoxides preferably are applied block wise, preferably as a terminal ethylene oxide block ("EO cap") so that the resulting polyols have more than 70% of terminal primary OH groups.

Water or dihydric or trihydric alcohols, such as ethylene glycol, 1,2- and 1,3-propanediol, diethylene glycol, dipropylene glycol, 1,4-butanediol, glycerol or trimethylolpropane, preferably ethylene glycol, 1,2- and 1,3-propanediol, diethylene glycol, dipropylene glycol, tripropylene glycol and 1,4-butanediol, are suitable as the initiator molecule.

The polyetherpolyols, preferably polyoxypropylenepolyoxyethylenepolyols, have an average functionality of from 1.7 to 3.0, preferably 1.7 to 2.7 and more preferably 1.8 to 2.5 and most preferably 2.0 to 2.5 and molecular weights of from 2000 to 6000 g/mol and preferably from 3000 to 5500 g/mol and most preferably from 4000 to 5500 g/mol and have an OH-value of preferably 20 to 65 mg KOH/g and more preferably 22 to 35 mg KOH/g and the most preferably 25 to 30 mg KOH/g.

To obtain the polyisocyanate prepolymers (a) the above-described polyisocyanates (a1) are reacted in stoichiometric excess, for example at temperatures of from 30 to 100° C, preferably about 80° C, with polyesterols (a2) and polyetherols (a3) to form the prepolymer. In general the resulting polyisocyanate prepolymer has a free NCO content in the range of 12 to 32, preferably 15 to 30, more preferably 18 to 28 and most preferable 20 to 25. Concerning the present invention it is essential that the content of polyetherol (a3), based on the total weight of the polyisocyanate prepolymer (a) is in the range of 3 to 15% by weight, preferably in the range of 3 to 10% by weight and more preferably in the range of 3 to 7 % by weight.

For the present invention it is not necessary that the polyisocyanate (a) comprises any dispersed particles, especially any polymer polyol. Nevertheless it is possible to add small amounts of polymer polyol to component (a). In a preferred embodiment of the present invention the polyisocyanate (a) does not contain any dispersed particles.

As second polyester polyol (b) includes all polyesterols which are customarily used in polyurethane chemistry can be used. Preferably as polyesterpolyols (b) polyesterpolyols as described above under section (a2) can be used. First polyesterols (a2) and second polyesterols (b) can be same or different and in a preferred embodiment of the invention are the same polyesterols.

For the present invention the second polyesterpolyole (b) does not contain any dispersed particles. According to the present invention further polyols are compounds having at least two hydrogen atoms reactive towards isocyanate groups per moleculecule and having a molecular weight of at least 500 g/mol. In the present invention the reaction mixture does not comprise any polyols in addition to the compounds (a2), (a3) and (b).

Furthermore, blowing agents c) are present in the production of polyurethane foam moldings. These blowing agents c) can comprise water. Apart from water, generally known chemically and/or physically acting compounds can additionally be used as blowing agents c). For the purposes of the present invention, chemical blowing agents are compounds which react with isocyanate to form gaseous products, for example water or formic acid. Physical blowing agents are compounds which are dissolved or emulsified in the starting materials for polyurethane production and vaporize under the conditions of polyurethane formation. These are, for example, hydrocarbons, halogenated hydrocarbons and other compounds, for example perfluorinated alkanes such as perfluorohexane, chlorofluorocarbons and ethers, esters, ketones, acetals or mixtures thereof, for example (cyclo)aliphatic hydrocarbons having from 4 to 8 carbon atoms or fluorinated hydrocarbons such as Solkane® 365 mfc from Solvay Fluorides LLC. In a preferred embodiment, a mixture comprising at least one of these blowing agents and water is used as blowing agent; in particular, water is used as only blowing agent. If no water is used as only blowing agent, preference is given to using exclusively physical blowing agents.

In a preferred embodiment, the water content is from 0.1 to 2% by weight, preferably from 0.2 to 1.5% by weight, particularly preferably from 0.3 to 1.2% by weight, based on the total weight of the components b) to f).

In a further preferred embodiment, hollow microspheres comprising physical blowing agent are added as additional blowing agent in the reaction of the components a) to f). The hollow microspheres can also be used in admixture with the abovementioned blowing agents.

The hollow microspheres usually comprise a shell of thermoplastic polymer and are filled in the core with a liquid, low-boiling substance based on alkanes. The production of such hollow microspheres is described, for example, in US 3 615 972. The hollow microspheres generally have a diameter of from 5 to 50 µm. Examples of suitable hollow microspheres can be obtained under the trade name Expancell® from Akzo Nobel.

The hollow microspheres are generally added in an amount of from 0.5 to 5% by weight, based on the total weight of the components b), c) and d).

As chain extenders and/or crosslinkers d), use is made of substances having a molecular weight of preferably less than 500 g/mol, particularly preferably from 60 to 400 g/mol, with chain extenders having 2 hydrogen atoms which are reactive toward isocyanates and crosslinkers having 3 hydrogen atoms which are reactive toward isocyanate. These can preferably be used individually or in the form of mixtures. Preference is given to using diols and/or triols having molecular weights of less than 400, particularly preferably from 60 to 300 and in particular from 60 to 150. Possible chain extenders/crosslinkers are, for example, aliphatic, cycloaliphatic and/or araliphatic diols having from 2 to 14, preferably from 2 to 10, carbon atoms, e.g. ethylene glycol, 1,3-propanediol, 1,10-decanediol, 1,2-, 1,3-, 1,4-dihydroxyclohexane, diethylene glycol, dipropylene glycol and 1,4-butanediol, 1,6-hexanediol and bis(2-hydroxyethyl)hydroquinone, triols, such as 1,2,4-, 1,3,5-trihydroxycyclohexane, glycerol and trimethylolpropane, and low molecular weight hydroxyl-comprising polyalkylene oxides based on ethylene oxide and/or 1,2-propylene oxide and the abovementioned diols and/or triols as starter molecules. Particular preference is given to using monoethylene glycol, 1,4-butanediol, glycerol or mixtures thereof as chain extenders d).

If chain extenders, crosslinkers or mixtures thereof are employed, these are advantageously used in amounts of from 1 to 60% by weight, preferably from 1.5 to 50% by weight and in particular from 2 to 40% by weight, based on the weight of the components b) and d).

As catalysts e) for producing the polyurethane foams, preference is given to using compounds which strongly accelerate the reaction of the polyols b) and optionally chain extenders and crosslinkers d) with the organic, optionally modified polyisocyanates a). Mention may be made by way of example of amidines such as 2,3-dimethyl-3,4,5,6-tetrehydropyrimidine, tertiary amines such as triethylamine, tributylamine, dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentamethyldiethylenetriamine, bis(dimethylaminoethyl) ether, bis(dimethylaminopropyl)urea, dimethylpiperazine, 1,2-dimethylimidazole, 1-azabicyclo[3.3.0]octane and preferably 1,4-diazabicyclo[2.2.2]octane and alkanolamine compounds such as triethanolamine, triisopropanolamine, N-methyldiethanolamine and N-ethyldiethanolamine and dimethylethanolamine. Further possibilities are organic metal compounds, preferably organic tin compounds such as tin(II) salts of organic carboxylic acids, e.g. tin(II) acetate, tin(II) octoate, tin(II) ethylhexanoate and tin(II) laurate, and the dialkyltin(IV) salts of organic carboxylic acids, e.g. dibutyltin diacelate, dibutyltin dilaurate, dibutyltin maleate and dioctyltin diacetate, and also bismuth carboxylates such as bismuth(III) neodecanoate, bismuth 2-ethylhexanoate and bismuth octanoate, or mixtures thereof. The organic metal compounds can be used either alone or preferably in combination with strongly basic amines. If the component b) is an ester, preference is given to using exclusively amine catalysts.

Preference is given to using from 0.001 to 5% by weight, in particular from 0.05 to 2% by weight, of catalyst or catalyst combination, based on the weight of component b).

If appropriate, auxiliaries and/or additives f) can additionally be added to the reaction mixture for producing the polyurethane foams. Mention may be made by way of example of surface-active substances, foam stabilizers, cell regulators, further mold release agents, fillers, dyes, pigments, hydrolysis inhibitors, odor-absorbing substances and fungistatic and/or bacteriostatic substances.

Possible surface-active substances are, for example, compounds which serve to aid homogenization of the starting materials and are also optionally suitable for regulating the cell structure. Mention may be made by way of example of emulsifiers such as the sodium salts of castor oil sulfates or of fatty acids and also salts of fatty acids with amines, e.g. diethylamine oleate, diethanolamine stearate, diethanolamine ricinoleate, salts of sulfonic acids, e.g. alkali metal or ammonium salts of dodecylbenzenesulfonic or dinaphthylmethanedisulfonic acid, and ricinoleic acid; foam stabilizers such as siloxane-oxyalkylene copolymers and other organopolysiloxanes as products available under the trade name Dabco® 193, available from Air Products or Tegostab® B8905, available from Evonik, ethoxylated alkylphenols, ethoxylated fatty alcohols, paraffin oils, castor oil esters or ricinoleic esters, Turkey red oil and peanut oil, and cell regulators such as paraffins, fatty alcohols and dimethylpolysiloxanes. Oligomeric acrylates having polyoxyalkylene and fluoroalkane radicals as side groups are also suitable for improving the emulsifying action, the cell structure and/or stabilizing the foam. Preferably used are surfactants based on polysiloxanes, especially products available under the trade name Dabco® 193 or Tegostab® B8905. The surface-active substances are usually employed in amounts of from 0.3 to 3 parts by weight, preferably from 0.5 to 2 parts by weight and most preferably from 0.8 to 1.5 parts by weight, based on 100 parts by weight of the component b.

As suitable further mold release agents, mention may be made by way of example of: reaction products of fatty acid esters with polyisocyanates, salts of polysiloxanes comprising amino groups and fatty acids, salts of saturated or unsaturated (cyclo)aliphatic carboxylic acids having at least 8 carbon atoms and tertiary amines and also, in particular, internal mold release agents such as carboxylic esters and/or carboxamides prepared by esterification or amidation of a mixture of montanic acid and at least one aliphatic carboxylic acid having at least 10 carbon atoms with at least bifunctional alkanolamines, polyols and/or polyamines having molecular weights of from 60 to 400 g/mol, as disclosed, for example, in EP 153 639, mixtures of organic amines, metal salts of stearic acid and organic monocarboxylic and/or dicarboxylic acids or anhydrides thereof, as disclosed, for example, in DE-A-3 607 447, or mixtures of an imino compound, the metal salt of a carboxylic acid and, if appropriate, a carboxylic acid, as disclosed, for example, in US 4 764 537. Reaction mixtures according to the invention preferably contain no further mold release agents.

Fillers, in particular reinforcing fillers, are the customary organic and inorganic fillers, reinforcing materials, weighting agents, coating agents, etc., known per se. Specific examples which may be mentioned are: inorganic fillers such as siliceous minerals, for example sheet silicates such as antigorite, bentonite, serpentine, hornblendes, amphiboles, chrysotile and talc, metal oxides such as kaolin, aluminum oxides, titanium oxides, zinc oxides and iron oxides, metal salts such as chalk and barite, and inorganic pigments such as cadmium sulfide, zinc sulfide and also glass. Preference is given to using kaolin (china clay), aluminum silicate and coprecipitates of barium sulfate and aluminum silicate. Possible organic fillers are, for example: carbon black, melamine, rosin, cyclopentadienyl resins and graft polymers and also cellulose fibers, polyamide fibers, polyacrylonitrile fibers, polyurethane fibers, polyester fibers based on aromatic and/or aliphatic dicarboxylic esters and in particular carbon fibers.

The inorganic and organic fillers can be used individually or as mixtures and are advantageously added to the reaction mixture in amounts of from 0.5 to 50% by weight, preferably from 1 to 40% by weight, based on the weight of the components a) to d).

The present invention further provides a process for producing a polyurethane foam moldingin which the components a) to c) and optionally d), e) and/or f) are mixed with one another in such amounts that the equivalence ratio of NCO groups of the polyisocyanates (a) to the sum of the reactive hydrogen atoms of the components (b), (c) and (d) is from 1:0.8 to 1:1.25, preferably from 1:09 to 1:1.15.

The polyurethane foam moldings of the invention are preferably produced by the one-shot process by means of the low-pressure or high-pressure technique in closed, advantageously heated molds. The molds usually comprise metal, e.g. aluminum or steel. These processes are described, for example, by Piechota and Röhr In "Integralschaum-stoff", Carl-Hanser-Verlag, Munich, Vienna, 1975, or in "Kunststoffhandbuch", Volume 7, Polyurethane, 3rd Edition, 1993, Chapter 7.

The starting components a) to f) are for this purpose preferably mixed at a temperature of from 15 to 90°C, particularly preferably from 25 to 55°C, and the reaction mixture is introduced, optionally under superatmospheric pressure, into the mold. Mixing can be carried out mechanically by means of a stirrer or a stirring screw or under high pressure in the countercurrent injection process. The mold temperature is advantageously from 20 to 160°C, preferably from 30 to 120°C, particularly preferably from 30 to 60°C. For the purposes of the invention, the mixture of the components a) to f) at reaction conversions of less than 90%, based on the isocyanate groups, is referred to as reaction mixture.

The amount of reaction mixture introduced into the mold is calculated so that the moldings obtained have a density of preferably from 200 g/dm³ to 500 g/dm³, particularly preferably from 250 g/dm³ to 350 g/dm³. The degrees of compaction for producing the integral polyurethane foams of the invention are in the range from 1.1 to 8.5, preferably from 1.7 to 7.0.

The polyurethane foam moldings of the invention are preferably used as shoe sole, for example for slippers, street shoes, sports shoes, and boots. In particular, the polyurethane foams of the invention are used as sole material of slippers and high-heeled ladies' shoes. The thickness of the sole at the thickest point is preferably more than 3 cm, particularly preferably more than 5 cm. Furthermore, polyurethane foams according to the invention can be used in the interior of vehicles, for example in cars as steering wheels, headrests or gearstick knobs or as armrests. Further possible uses are as armrests for chairs or as motor cycle seats.
The invention is illustrated below with the aid of examples.

### Examples

### Starting materials used

- Polyol 1:: Polyetherol based on glycerol, propylene oxide and ethylene oxide and having an ethylene oxide content of 73 % by weight, an OH number of 42 mg KOH/g and a viscosity of 950 mPas at 25°C.
- Polyol 2:: Polyetherol based on glycerol, propylene oxide and ethylene oxide and having an ethylene oxide content of 11 % by weight, an OH number of 56 mg KOH/g and a viscosity of 475 mPas at 25°C.
- Polyol 3:: Polyetherol based on glycerol, propylene oxide and ethylene oxide and having an ethylene oxide content of 21 % by weight, an OH number of 27 mg KOH/g and a viscosity of 1225 mPas at 25°C.
- Polyol 4:: Polyesterol based on adipic acid, monoethylene glycol, diethylene glycol and glycerol and having an OH number of 60 mg KOH/g and a viscosity of 1150 mPas at 75°C.
- Polyol 5:: Polyesterol based on a mixture of succinic acid, glutaric acid and adipic acid, monoethylene glycol and glycerol and having an OH number of 58 mg KOH/g and a viscosity of 430 mPas at 100°C.
- Polyol 6:: Polyesterol based on adipic acid, monoethylene glycol, diethylene glycol and having an OH number of 56 mg KOH/g and a viscosity of 525 mPas at 75°C.
- Polyol 7:: Polyesterol based on a mixture of succinic acid, glutaric acid and adipic acid and monoethylene glycol and having an OH number of 56 mg KOH/g and a viscosity of 650 mPas at 75°C.
- CE:: Monoethylene glycol
- CL:: Triethylenediamine dissolved in monoethylene glycol
- Stabi:: Dabco® DC 193 from Air Products
- ISO 1:: Monomeric MDI
- ISO 2:: Monomeric MDI, comprising about 25% by weight of carbodiimide-modified monomeric MDI

### Preparation of prepolymers:

### Prepolymer 1:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 405 g of Polyol 4 were added slowly over a period of 15 minutes and the mixture was stirred at 80°C for another 2 hours. The prepolymer obtained had an NCO content of 23.0%.

### Prepolymer P2:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 101,25 g of Polyol 1 and 303.75 g of Polyol 4 were added slowly over a period of 15 minutes and the mixture was stirred at 80°C for another 2 hours. The prepolymer obtained had an NCO content of 23.0%.

### Prepolymer P3:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 101,25 g of Polyol 2 and 303.75 g of Polyol 4 were added slowly over a period of 15 minutes and the mixture was stirred at 80°C for another 2 hours. The prepolymer obtained had an NCO content of 23.0%.

### Prepolymer P4:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 30 g of Polyol 3 and 375 g of Polyol 5 were added slowly over a period of 15 minutes and the mixture was stirred at 80°C for another 2 hours. The prepolymer obtained had an NCO content of 23.0%.

### Prepolymer P5:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 101.25 g of Polyol 3 and 303.75 g of Polyol 4 were added slowly over a period of 15 minutes and the mixture was stirred at 80°C for another 2 hours. The prepolymer obtained had an NCO content of 23.1%.

### Prepolymer P6:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 60 g of Polyol 3 and 345 g of Polyol 5 were added slowly over a period of 15 minutes and the mixture was stirred at 80°C for another 2 hours. The prepolymer obtained had an NCO content of 22.9%.

### Prepolymer P7:

1004,95 g of ISO 1, 90 g of ISO 2 and 0.045 g Benzoylchloride were placed in a 2 I 4-neck flask provided with nitrogen inlet, stirrer, condenser and dropping funnel and were heated to about 60°C. At 60°C, 101.25 g of Polyol 4 and 303.75 g of Polyol 3 were added slowly over a period of 15 minutes and the mixture was stirred at 80°C for another 2 hours. The prepolymer obtained had an NCO content of 23.4%.

The inventive examples E1 to E4 and the comparative examples C1 to C5 were carried out. For this purpose, the components indicated in Table 1 (figures in parts by weight) were mixed with the indicated isocyanate prepolymers at the isocyanate index indicated and in each case firstly free-foamed and secondly introduced into a sole mold having the heel height of 10 cm so as to form moldings having a density of 350 g/dm³. The density of the free-foamed polyurethane foam in g/l (FR density) is likewise shown in Table 1.

**Table 1**

| | C1 | C2 | C3 | C4 | C5 | E1 | E2 | E3 | E4 |
|---|---|---|---|---|---|---|---|---|---|
| Polyol 5 | 55,92 | 55,92 | 55,92 | 65,9 | 55,92 | 55,92 | 65,92 | 65,9 | 65,75 |
| Polyol 6 | 30 | 30 | 30 | | 30 | 30 | | | |
| Polyol 7 | | | | 20 | | | 20 | 20 | 20 |
| CE | 12,5 | 12,5 | 12,5 | 12,5 | 12,5 | 12,5 | 12,5 | 12,5 | 12,5 |
| Stabi | 1 | 1 | 1 | 1 | 1 | 1 | 1 | 1 | 1 |
| water | 0,58 | 0,58 | 0,58 | 0,6 | 0,58 | 0,58 | 0,58 | 0,6 | 0,75 |
| CL | 1,1 | 1,1 | 1,1 | 0,9 | 1,1 | 1,1 | 0,9 | 0,9 | 0,9 |
| Prepo | P1 | P2 | P3 | P4 | P7 | P5 | P5 | P6 | P6 |
| Index | 95 | 95 | 95 | 95 | 95 | 95 | 98 | 96 | 98 |
| FR density (g/dm³) | 224 | 225 | 221 | 193 | 218 | 221 | 200 | 197 | 165 |
| shrinkage | yes | yes | yes | yes | no | no | no | no | no |
| Surface quality | | | | | bad | good | good | good | good |

24 hours after having been produced, the moldings were evaluated. Both the free-foamed foam and the molding as per comparative examples C1 to C4 displayed significant shrinkage or local shrinkage on the surface. Foam obtained in comparative example C5 was dimensionally stable and did not show shrinkage, however the skin quality was bad - rough-textured skin and some pinholes on the surface have been observed.

Both the free-foamed foam and the molding as per inventive examples E1 to E4 showed no sign of shrinkage and a good microcellular foam structure. Furthermore, the moldings had a good surface quality. Simillar results were obtained at a moulded density of 270 g/dm³ with a sole mould having a heel height of 3.5 cm.

## Claims

1. A process for producing polyurethane foam moldings having a density of200 to 500 g/dm³, wherein
a) polyisocyanate prepolymer obtainable by reacting at least one organic polyisocyanate (a1), at least one first polyesterol (a2) and at least one polyetherol (a3) obtained from the alkoylation of a starter molecule with alkylenoxide comprising ethylene oxide wherein the polyetherol (a3) has a hydroxyl number in the range of 20 to 65 mg KOH/g, a number average molecular weight of 2000 to 6000, a functionality of 1.7 to 3.0 and a content of ethylenoxide units in the range of 15 to 25 % by weight based on the total weight of the polyetherol (a3) and wherein the content of the polyetherol (a3), based on the total weight of the organic polyisocyanate prepolymer (a), is in the range of 3 to 15 % by weight,
is mixed with
b) at least one second polyesterol, and the second polyesterol (b) does not contain any dispersed particles
c) blowing agent and optionally
d) chain extender and/or crosslinker,
e) catalyst and
f) other auxiliaries and/or additives
to form a reaction mixture, which does not comprise any polyols having a molecular weight of at least 500g/mol in addition to the compounds (a2), (a3) and (b) the latter is introduced into a mold and allowed to react to forma polyurethane foam molding.

2. A process as claimed in claim 1 wherein the isocyanate prepolymer a) has an NCO-content in the range of 12 to 32 % by weight.

3. A process as claimed in any of claims 1 or 2 wherein the first polyesterol (a2) has a functionality in the range of 1.9 to 3, and a number average molecular weight in the range of 1000 to 3000 g/mol.

4. A process as claimed in any of claims 1 to 3 wherein the second polyesterol (b) has a functionality in the range of 1.9 to 3 and a number average molecular weight in the range of 1000 to 3000 g/mol.

5. A process as claimed in any of claims 1 to 4 wherein the first polyesterol (a2) and the second polyesterol (b) are the same.

6. A process as claimed in any of claims 1 to 4 wherein the reaction is performed at an isocyanate index in the range of 80 to 120.

7. Polyurethane foam moldings obtained from a process as claimed in any of claims 1 to 6.

8. Use of a polyurethane molding according to claim 7 as shoe sole.

## Patentansprüche

1. Verfahren zur Herstellung von Polyurethanschaumstoffformkörpern mit einer Dichte von 200 bis 500 g/dm³, bei dem man
a) Polyisocyanat-Prepolymer, das erhältlich ist durch Umsetzung von mindestens einem organischen Polyisocyanat (a1), mindestens einem ersten Polyesterol (a2) und mindestens einem Polyetherol (a3), das aus der Alkoxylierung eines Startermoleküls mit Ethylenoxid umfassenden Alkylenoxid erhalten wird, wobei das Polyetherol (a3) eine Hydroxylzahl im Bereich von 20 bis 65 mg KOH/g, ein zahlenmittleres Molekulargewicht von 2000 bis 6000, eine Funktionalität von 1,7 bis 3,0 und einen Gehalt an Ethylenoxid-Einheiten im Bereich von 15 bis 25 Gew.-%, bezogen auf das Gesamtgewicht des Polyetherols (a3), aufweist und wobei der Gehalt des Polyetherols (a3), bezogen auf das Gesamtgewicht des organischen Polyisocyanat-Prepolymers (a), im Bereich von 3 bis 15 Gew.-% liegt, mit
b) mindestens einem zweiten Polyesterol,
c) Treibmittel und gegebenenfalls
d) Kettenverlängerungsmittel und/oder Vernetzer,
e) Katalysator und
f) sonstigen Hilfsmitteln und/oder Zusatzstoffen
zu einer Reaktionsmischung, die keine Polyole mit einem Molekulargewicht von mindestens 500 g/mol zusätzlich zu den Verbindungen (a2), (a3) und (b) umfasst, vermischt, in eine Form gibt und zu einem Polyurethanschaumstoffformkörper ausreagieren lässt.

2. Verfahren nach Anspruch 1, bei dem das Isocyanat-Prepolymer a) einen NCO-Gehalt im Bereich von 12 bis 32 Gew.-% aufweist.

3. Verfahren nach Anspruch 1 oder 2, bei dem das erste Polyesterol (a2) eine Funktionalität im Bereich von 1,9 bis 3 und ein zahlenmittleres Molekulargewicht im Bereich von 1000 bis 3000 g/mol aufweist.

4. Verfahren nach einem der Ansprüche 1 bis 3, bei dem das zweite Polyesterol (b) eine Funktionalität im Bereich von 1,9 bis 3 und ein zahlenmittleres Molekulargewicht im Bereich von 1000 bis 3000 g/mol aufweist.

5. Verfahren nach einem der Ansprüche 1 bis 4, bei dem das erste Polyesterol (a2) und das zweite Polyesterol (b) gleich sind.

6. Verfahren nach einem der Ansprüche 1 bis 4, bei dem die Umsetzung bei einem Isocyanatindex im Bereich von 80 bis 120 durchgeführt wird.

7. Polyurethanschaumstoffformkörper, erhalten aus einem Verfahren nach einem der Ansprüche 1 bis 6.

8. Verwendung eines Polyurethanformkörpers nach Anspruch 7 als Schuhsohle.

## Revendications

1. Procédé pour la production de moulages en mousse de polyuréthane possédant une densité de 200 à 500 g/dm³,
a) un prépolymère de type polyisocyanate pouvant être obtenu par la mise en réaction d'au moins un polyisocyanate organique (a1), d'au moins un premier polyestérol (a2) et d'au moins un polyéthérol (a3) obtenu par l'alcoxylation d'une molécule de départ avec un oxyde d'alkylène comprenant de l'oxyde d'éthylène, le polyéthérol (a3) possédant un indice d'hydroxyle de 20 à 65 mg de KOH/g, un poids moléculaire moyen en nombre de 2 000 à 6 000, une fonctionnalité de 1,7 à 3,0 et une teneur en motifs de type oxyde d'éthylène dans la plage de 15 à 25 % en poids sur la base du poids total du polyéthérol (a3) et la teneur du polyéthérol (a3), sur la base du poids total du prépolymère de type polyisocyanate organique (a), étant dans la plage de 3 à 15 % en poids,
étant mélangé avec
b) au moins un deuxième polyestérol, et le deuxième polyestérol (b) ne contenant aucune particules dispersées
c) un agent de gonflement et éventuellement
d) un agent d'extension de chaîne et/ou un agent de réticulation,
e) un catalyseur et
f) d'autres auxiliaires et/ou additifs
pour former un mélange réactionnel, qui ne comprend aucun polyols possédant un poids moléculaire d'au moins 500 g/mole en plus des composés (a2), (a3) et (b) qui est introduit dans un moule et qu'on laisse réagir pour former un moulage en mousse de polyuréthane.

2. Procédé selon la revendication 1, le prépolymère de type isocyanate a) possédant une teneur en NCO de 12 à 32 % en poids.

3. Procédé selon l'une quelconque des revendications 1 et 2, le premier polyestérol (a2) possédant une fonctionnalité dans la plage de 1,9 à 3, et un poids moléculaire moyen en nombre de 1 000 à 3 000 g/mole.

4. Procédé selon l'une quelconque des revendications 1 à 3, le deuxième polyestérol (b) possédant une fonctionnalité dans la plage de 1,9 à 3 et un poids moléculaire moyen en nombre de 1 000 à 3 000 g/mole.

5. Procédé selon l'une quelconque des revendications 1 à 4, le premier polyestérol (a2) et le deuxième polyestérol (b) étant identiques.

6. Procédé selon l'une quelconque des revendications 1 à 4, la réaction étant réalisée selon un indice d'isocyanate dans la plage de 80 à 120.

7. Moulages en mousse de polyuréthane obtenus par un procédé selon l'une quelconque des revendications 1 à 6.

8. Utilisation d'un moulage de polyuréthane selon la revendication 7 comme semelle de chaussure.
